(19) Europäisches Patentamt
European Patent Office
Office européen des brevets

(11) **EP 2 682 634 B1**

(12) **EUROPEAN PATENT SPECIFICATION**

(45) Date of publication and mention
of the grant of the patent:
**26.10.2016   Bulletin 2016/43**

(51) Int Cl.:
*F16D 65/12* *(2006.01)*      *F16D 65/847* *(2006.01)*

(21) Application number: **12382271.0**

(22) Date of filing: **06.07.2012**

(54) **Brake disc**

Bremsscheibe

Disque de frein

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.01.2014   Bulletin 2014/02**

(73) Proprietor: **Lingotes Especiales, S.A.**
**47004 Valladolid (ES)**

(72) Inventors:
  • **Muruzàbal Rivero, Javier**
    **47007 Valladolid (ES)**
  • **Muruzàbal Rivero, Ma de Ujué**
    **47007 Valladolid (ES)**
  • **Villacé Díez, Enrique**
    **47007 Valladolid (ES)**
  • **Díez Vielba, Pedro José**
    **47007 Valladolid (ES)**
  • **Luengo Herrero, Alberto**
    **47007 Valladolid (ES)**

  • **Velasco Fernàndez, Jacobo**
    **47007 Valladolid (ES)**
  • **Sànchez Rodríguez, Raquel**
    **47007 Valladolid (ES)**
  • **Andrés Díez, Marta**
    **47007 Valladolid (ES)**
  • **Gonzàlez Hernàndez, Manuel I**
    **47151 Boecillo**
    **Valladolid (ES)**
  • **Rodríguez Pérez del Rio, Mario**
    **47151 Boecillo**
    **Valladolid (ES)**
  • **Cañibano Álvarez, Esteban**
    **47151 Boecillo**
    **Valladolid (ES)**

(74) Representative: **Ungria López, Javier**
    **Avda. Ramón y Cajal, 78**
    **28043 Madrid (ES)**

(56) References cited:
    **EP-A1- 2 060 822      EP-B1- 0 521 754**
    **US-A1- 2001 032 759**

**Description**

## OBJECT OF THE INVENTION

The present invention relates to a brake disc comprising holes that increase the cooling of the disc, while decreasing the mass, the disc being wholly or partly manufactured by casting.

## BACKGROUND OF THE INVENTION

The use of brake discs on all types of motor vehicles is now known. These brake discs must meet two essential requirements, the first is to transform the kinetic energy of a moving vehicle into heat for carrying out the reduction in speed or even stopping the same in case the driver requests it. The second requirement is to rapidly and effectively dissipate such generated heat, since the efficiency of the braking system and the span life of some of the components forming part of the braking system largely depends on this requirement. Furthermore, the fact of quickly and effectively dissipating the heat generated during braking is increasingly important in part because the daily performance of the vehicles is better, reaching ever higher speeds more easily.

Overheating can cause, among others, two undesirable effects. The first one is called "warping" and directly affects the brake disc. This phenomenon occurs when the overheated part is the brake disc, being more sensitive to stress so that it is deformed. This effect has a number of drawbacks; some of them are vibration, cyclic noises, reduction in braking effectiveness, among others.

The second undesirable effect is called "crystallization", affecting in this case the brake pads, element designed to rub directly against the disc in order to slow down its rotation speed. In this case what happens is that due to a high temperature in the brake pads, the grainy surface of contact with the brake discs is fused, creating a brilliant film that in addition to generate an annoying noise, it stops being effective in friction with the brake disc, i.e., the vehicle stops braking.

The brake discs described in documents DE2507264A1 and EP0521754B1 are known as the brake disc similar to that described in the present invention. The German patent application discloses an arrangement of elliptical holes of varying size depending on the distance at which they are with respect to the center of rotation of the brake disc. The European patent describes the arrangement of cylindrical holes, following some axes either oblique or perpendicular with respect to the median plane of symmetry located in the venting channel. It includes an alternative embodiment which includes recessed holes with grooves, notches or the like, in at least one of its ends. This European patent also includes, manufacturing the hole of the friction tracks, a casting manufacture method including the use of two elements, complementary to each other, which together provide the final geometry to create the hole during the casting process.

The brake discs described in documents US2001/032759A1 and EP2060822A1 are also known. The brake discs of the document US2001/032759A1 comprise an axis through the centers of openings of holes disposed at an angle less than 90 degrees to the friction surfaces. The holes can have a conical or cylindrical cross section, and as a result in the friction surfaces there are oval/elliptical end openings. The brake discs of the document EP2060822A1 are very similar to the brake discs of the document US2001/032759A1. These brake discs comprise an axis through the centers of openings of holes disposed at an angle less than 90° and greater than 0° to the friction surfaces. In this case, the holes are limited to a conical cross section. As a result, also in the friction surfaces there are oval/elliptical end openings. The brake discs described in the documents US2001/032759A1 and EP2060822A1 require a drilling process to obtain the disc holes due to the angled holes.

In the present invention, thanks to the use of advanced tools for calculating the fluid dynamic behavior of the disc at different rotation speeds, within the full range of operation in a vehicle, it has been concluded that the proposed geometry achieves the greatest ability to dissipate heat by convection. This geometry of the holes also allows the disc to be manufactured entirely by casting, avoiding the need for a machining process for making holes.

## DESCRIPTION OF THE INVENTION

The invention being described discloses a brake disc with a particular geometric configuration of holes in the friction tracks increasing the cooling of the disc, while decreasing the mass thereof. As discussed in the previous section, we have analyzed the heat dissipation capacity of the disc with different geometric shapes using advanced tools for calculating the fluid dynamic behavior until finding the one that the present invention discloses, which is more effective than those known in the state of the art.

It has been pursued, in addition to a significant lightening of the disc, that during the rotation of the brake disc, the holes in the tracks favor the passage of air from the outside of the disc to the venting channels. The present shape also favors, with a progressive decrease of the passage area caused by the geometry of the orifices, the acceleration of the fluid, which results in a greater cooling of the disc.

In order to achieve the objectives mentioned in the preceding sections, the invention proposes a brake disc for vehicles, comprising a first track, which comprises at least a first friction surface, a cup, as part of the disc attached to a hub of a vehicle, and a set of through holes distributed over the first track. Each through hole comprises a first diameter arranged in, at least, the first friction surface, and a second diameter arranged on an opposite surface of, at least, the first track, with this second diameter smaller than the first diameter.

A very important feature of the present invention is that a first center and a second center of the first diameter and second diameter, respectively, are offset from each other with respect to a perpendicular of, at least, the first friction surface, the projection of the second diameter being contained within the projection of the first diameter; and section of maximum inclination in the connecting part between the first diameter and the second diameter of the through holes, there is a tilt angle with respect to the perpendicular of the first friction surface of between 1° and 6°.

In a preferred embodiment of the brake disc object of the present invention, the first center and the second center of the first diameter and second diameter, respectively, are aligned with each other with respect to a radial line passing through a rotation axis of the disc. For this case, the center of the second diameter is arranged, with respect to the rotation axis of the disc, at a distance in the first track larger than the center of the first diameter.

In another preferred embodiment, the first center and the second center of the first diameter and second diameter, respectively, are aligned with each other according to a circumferential line about the rotation axis of the disc. For this other case, the second center of the second diameter is, according to the direction of rotation of the disc, following the first center of the first diameter.

Another very important feature is the fact that the present invention may comprise a second track, which comprises a second friction surface faced to the outside of the brake disc, and a set of connecting sections, arranged in contact with the first track and the second track in an intermediate area between the two tracks. This set of connecting sections defines venting channels in the intermediate area between the first track and second track.

When the brake disc comprises two tracks, the through holes are arranged in the first track and/or second track with the first diameter in the friction surfaces and with the second diameter in the opposite side of the track wherein the first diameter is arranged. In this way, the air flow is accelerated from the outer faces of the tracks of the brake disc to the intermediate area in which the connecting sections are located, so that the air is finally expelled from the disc through the periphery of said intermediate area.

Another important feature of the through holes is that they may comprise a first diameter value according to the following formula: $\varnothing_M = \varnothing_m + K$, wherein $(e/2) \leq K \leq (e+3\text{ mm})$, "e" being the track thickness. Furthermore the value of "$\varnothing_m$" may be comprised between 6 and 10 millimeters, both included.

In a preferred embodiment, the brake disc object of the present invention comprises at least one through hole for each venting channel. It may also comprise a set of openings provided in the cup, as well as venting channels have a variable section.

The through holes may also be arranged in the midline of the space between connecting sections. Said through holes may likewise be radially aligned with at least one connecting section, said connecting section being located on the mid radius of the venting channel.

## BRIEF DESCRIPTION OF THE FIGURES

Figure 1 shows a perspective view of a retro-vented perforated brake disc according to a preferred embodiment of the present invention.

Figure 2.a shows a perspective view of a portion of the retro-vented perforated brake disc according to the preferred embodiment shown in Figure 1.

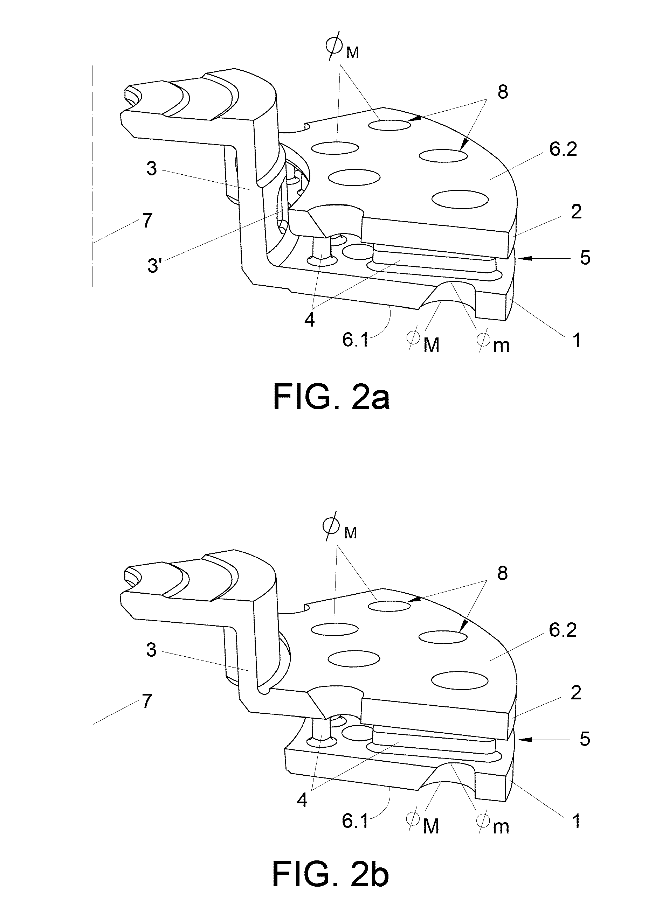

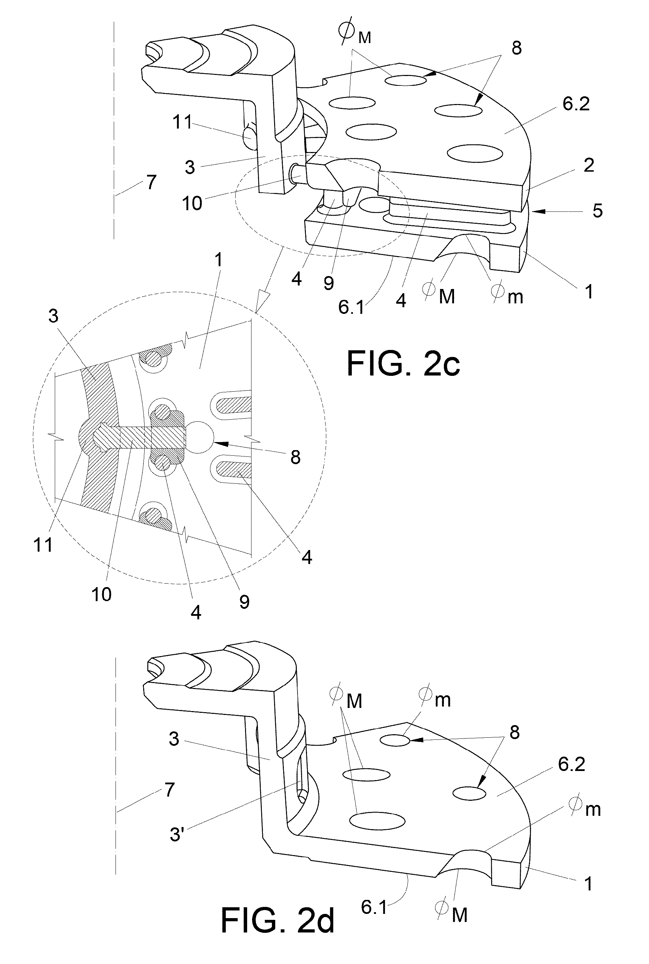

Figure 2.b shows a perspective view of a portion of a vented perforated comprised by the present invention, showing the air flow passing through the hole itself.

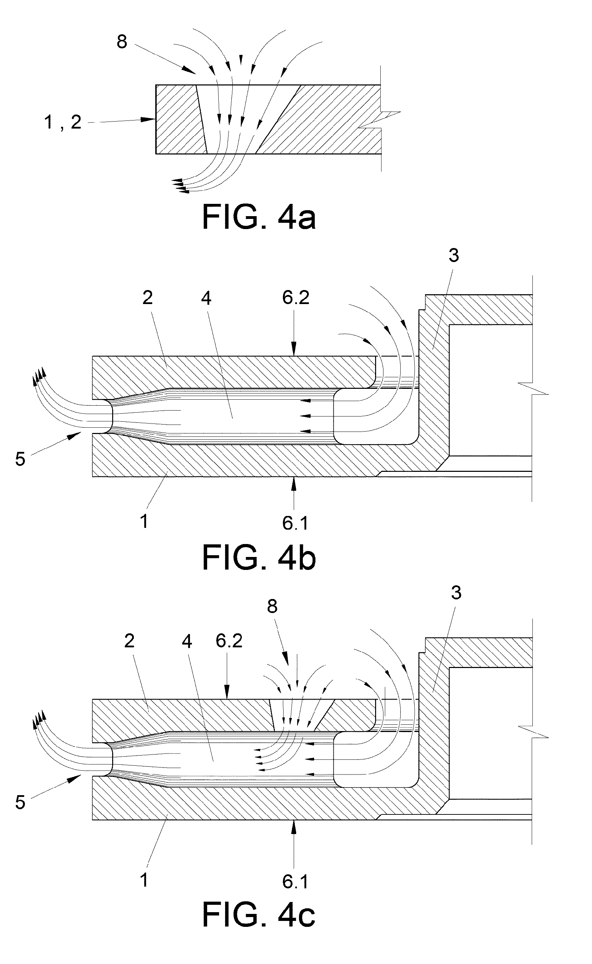

Figure 4.b illustrates an elevation view of a radially sectioned venting channel showing the air flow passing through the venting channel.

Figure 4.c illustrates that which is encompassed by Figures 4.a and 4.b in the same figure.

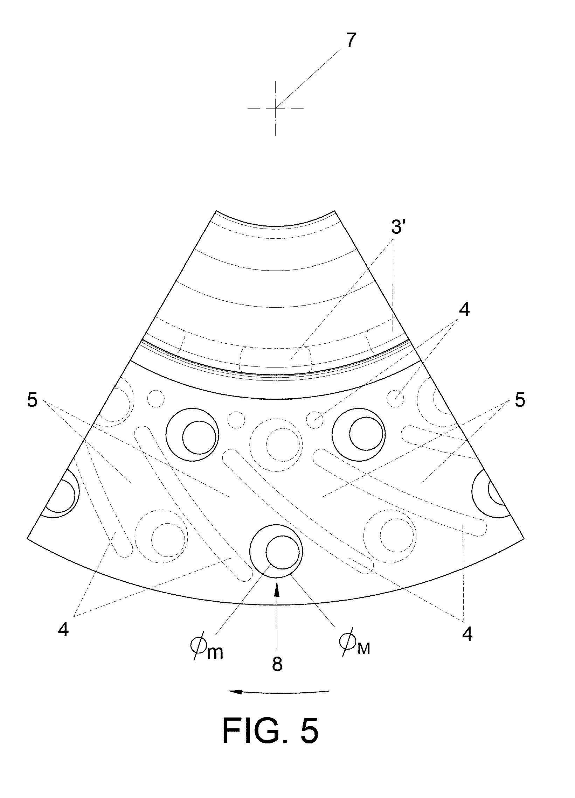

Figure 5 shows a plan view of the retro-vented perforated brake disc according to another preferred embodiment of the present invention.

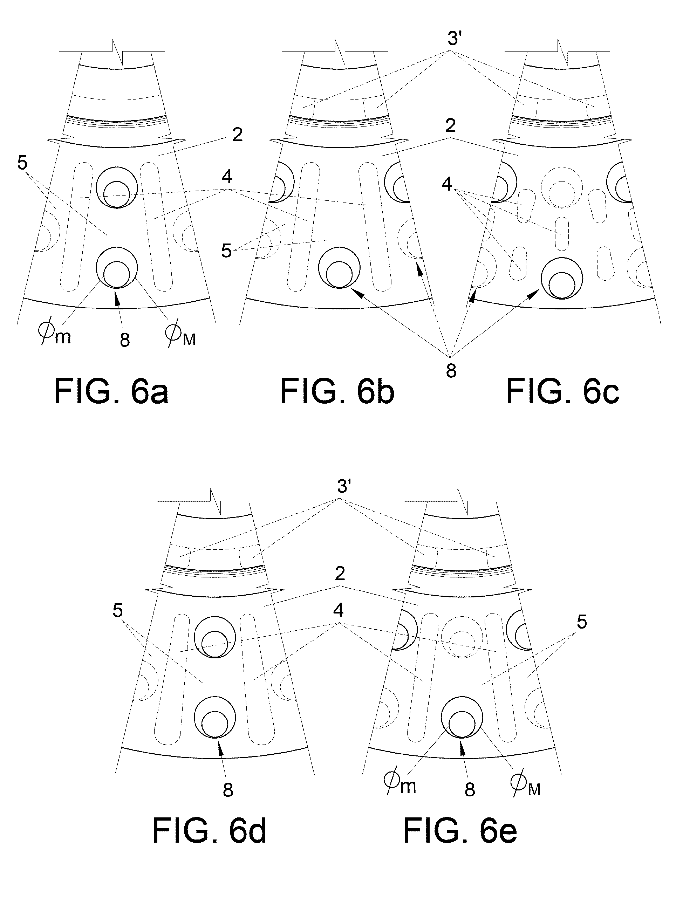

Figures 6.a-6.e show plan views of other preferred embodiments of the present invention.

Below there is a list of the different parts shown in the figures that integrate the invention:

| | |
|---|---|
| 1 | = First track |
| 2 | = Second track |
| 3 | = Cup |
| 3' | = Opening |
| 4 | = Connecting section |
| 5 | = Venting channel |
| 6.1 | = First friction surface |
| 6.2 | = Second friction surface |
| 7 | = Rotation axis of the disk |
| 8 | = Through hole |
| 9 | = Fastener |
| 10 | = Connecting means |
| 11 | = Protrusion |
| $\varnothing_M$ | = First diameter |
| $\varnothing_m$ | = Second diameter |
| M | = First center of the first diameter |
| M | = Second center of the second diameter |
| E | = Track thickness |
| $\alpha$ | = Tilt angle |
| R | = Radial line of the disc |
| C | = Circumferential line of the disc |

## DESCRIPTION OF THE EMBODIMENTS OF THE INVENTION

Now a description of exemplary embodiments of the present invention is provided, in an illustrative and non limiting manner, referring to the numbering adopted in the figures.

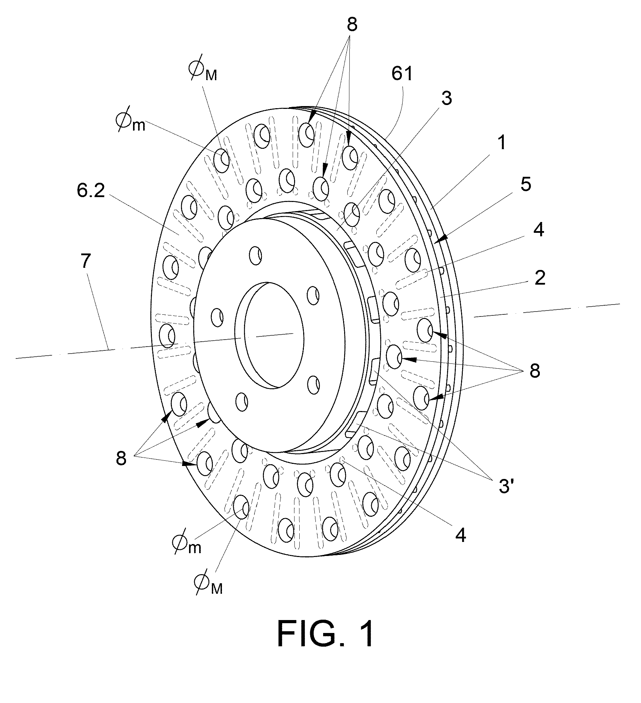

As already mentioned, and as it can be seen in Figure 1, the present invention discloses a novel configuration of the brake disc, preferably corresponding to an axial type brake for vehicles. In addition to achieving the objective of providing a lightweight brake disc, using the analysis discussed in previous sections, a geometry has been obtained for the through holes (8) that favor the "Venturi effect". In this manner, the fluid velocity increases while passing through the same, increasing the heat dissipation capacity.

For the case of a retro-vented perforated brake disc, as shown in Figure 1, the disc preferably comprises a first track (1) and a second track (2) connected together by a set of connecting sections (4) with varied geometries, with the first track (1) being the one that forms a unit with a cup (3), extension of said first track (1) couples to the hub of the vehicle. In the cup (3) of the brake discs of the present invention openings (3') may be arranged, so as to contribute to the lightening and cooling of the disc. Each of the two tracks (1, 2) comprises a friction surface (6.1, 6.2), disc areas enduring the friction of additional elements, such as brake pads, in order to slow down or even stop the vehicle comprising the brake disc. These friction surfaces (6.1, 6.2), a first (6.1) and a second (6.2) friction surface, are the sides of the disc disposed toward the outside thereof, i.e., the sides of the tracks (1, 2) that are not in contact with the connecting sections (4) that connect the two tracks (1, 2) together.

The connecting sections (4) generate, according to their distribution, in addition to their geometric shapes, a set of venting channels (5) through which the air circulates when passing through the intermediate area between the two tracks (1, 2). These channels (5) extend, according to a preferred embodiment, radially with respect to a rotation axis (7) of the disc, which perpendicularly extends with respect to the friction surfaces (6.1, 6.2), and passing through the center of the disc. The arrangement of the venting channels (5), radial or not, favors the air output toward the outer perimeter of the disc through the gap between the first track (1) and the second track (2).

Figure 2.a shows a perspective view of a portion of the brake disc illustrated in Figure 1. On the one hand, it can be seen in greater detail how the connecting sections (4), for this embodiment, have different geometries. These connecting sections (4) preferably have an increase in their section so as to favor the connection of the same (4) to opposite surfaces to the friction ones (6.1, 6.2), i.e. to the surfaces wherein the venting channels (5) are located, by increasing the contact surface between both parts (1, 2; 4). This contact area of the connecting sections (4) with said surfaces is preferably concave from the point of view of the venting channels (5), in order to increase the surface to secure the connection between the connecting sections (4) and the aforementioned surfaces, while reducing the cross section of the venting channels (5) as little as possible.

Furthermore, it should be mentioned regarding the brake disc shown in this figure according to a preferred embodiment, how the disc comprises the first track (1) and the second track (2) with a constant section. That is, the thickness (e) of the two tracks (1, 2) does not vary along its radial extension. However, in the area of greater radius, the thickness (e) of at least one of the tracks (1, 2) can be higher, as it can be seen in Figures 4.b and 4.c, and later described.

Figure 2.b shows a perspective view of a portion of a vented perforated brake disc according to another preferred embodiment of the present invention. This type of brake differs from retro-vented perforated brake disc mainly in that in this case is the second track (2) which is forming a unit with the cup (3). Although the brake disc shown in this Figure 2.b lack of openings (3') in the cup (3), the vented perforated brake discs may comprise openings (3') in the cup (3).

Figure 2.c shows a perspective view of a portion of a brake disc, this being a mixture of the retro-vented perforated brake disc and the vented perforated brake disc, according to another preferred embodiment of the present invention. As in the previous figure, the brake disc may comprise opening (3') in the cup (3), although not been included in Figure 2.c.

In this latter type of disc, neither of the two tracks (1, 2) is attached to the cup (3) forming a single unit. On one side there is the cup (3), and on the other side there are the tracks (1, 2), which according to the embodiment shown in Figure 2c, are connected to each other by connecting sections (4) with different geometries. Finally, there are connecting means (10) connecting the tracks (1, 2) to the cup (3), such as it can be seen in the detail view. These connecting means (10) can create protrusions (11) inside the cup (3) when the connecting means (10) are trapped in the cup (3) during the manufacturing process. The opposite end of the connecting means (10) is fixed in the space existing between the first track (1) and the second track (2) by a fastener (9), according to a preferred embodiment of the present invention. These fasteners (9) may be caught between two consecutive connecting sections (4).

Figure 2.d shows a perforated solid brake disc comprising, as the discs shown in Figures 2.a, 2.b and 2.c, the through holes (8) of the present invention according to a preferred embodiment. This disc includes openings (3') in the cup, although may not. Such as shown in the embodiment of the figure, as in this case the disc comprises a single track (1), a first diameter ($\emptyset_M$) and a second diameter ($\emptyset_m$) can be found on one same side of the first track (1).

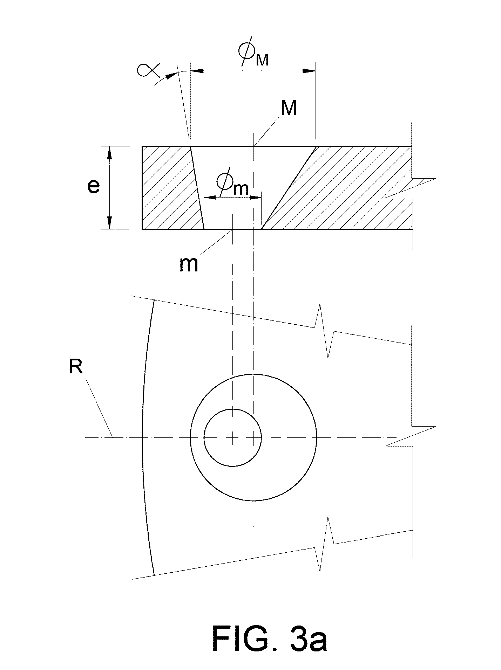

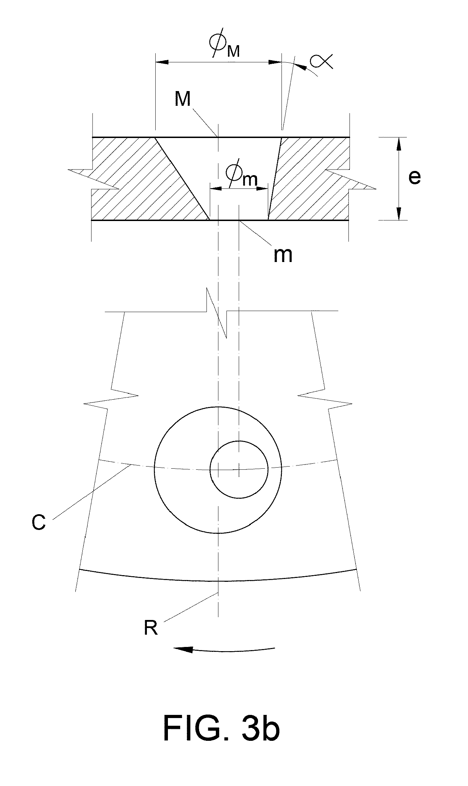

Figure 3.a shows, in detail, the through holes (8), one of the most important aspects of the present invention. The holes (8) comprise the connection, preferably linear, of the perimeters of two circumferences: one with the first diameter ($\emptyset_M$) and another with the second diameter ($\emptyset_m$). The circumference comprising the first diameter ($\emptyset_M$) is greater than the circumference comprising the second diameter ($\emptyset_m$), neither being concentric to each other.

For the case of brake discs comprising two tracks (1, 2), the first diameter ($\emptyset_M$) of the through holes (8) is arranged in at least one of the outer sides of the disc, i.e. in at least one of the friction surfaces (6.1, 6.2) and the second diameter ($\emptyset_m$) in the surfaces on which the connecting sections (4) are arranged.

For the case of solid brake discs, the first diameter ($\emptyset_M$) of the holes (8) is located, in a preferred embodiment different from that shown in Figure 2.d, in the side of the disc having a greater air flow.

The fact that the first diameter ($\emptyset_M$) is larger than the second diameter ($\emptyset_m$) is to facilitate the uptake of fresh air, while the narrowing to the second diameter ($\emptyset_m$) is to generate acceleration in the air velocity when passing through the through holes (8), since in this way the heat dissipation is increased.

The dimensions, as well as the arrangement of both diameters ($\emptyset_M$, $\emptyset_m$) have been obtained as discussed above, by using tools for calculating the fluid dynamic behavior. This analysis has been essential in establishing the maximum possible values for the first diameter ($\emptyset_M$), since in addition to contribute to the lightening of the total mass of the disc, it serves to a greater uptake of fresh air, but without excessively reducing the friction surfaces (6.1, 6.2). It is essential to reach a compromise between some of the different variables affecting the configuration of the brake discs; thereby a formula that establishes the different values of the holes (8) has been established:

$$\emptyset_M = \emptyset_m + K,$$

wherein $(e/2) \leq K \leq (e+3\ mm)$, "e" being the thickness of the track on which the through holes (8) are located, and $6mm \leq \emptyset_m \leq 10mm$.

Figures 3.a and 3.b show how, in a preferred embodiment, the arrangement of both diameters ($\emptyset_M$, $\emptyset_m$) is such that the projection of the second diameter ($\emptyset_m$) is contained within the first diameter ($\emptyset_M$). For the preferred embodiment shown in Figure 3a, a first center (M) corresponding to the first diameter ($\emptyset_M$) and a second center (m) corresponding to the second diameter ($\emptyset_m$), are aligned with respect to a radial line (R) extending from a rotation axis (7) of the disc located in the center of the disc and perpendicular to the friction surfaces (6.1, 6.2); but at the same time, both centers (M, m) are misaligned with respect to a perpendicular of the friction surfaces (6.1, 6.2).

For such preferred embodiment shown in Figure 3a, the second center (m) is, relative to the rotation axis of the disc (7), arranged at a distance larger than the first center (M) so that the section of maximum inclination in the connection between the first diameter ($\emptyset_M$) and the second diameter ($\emptyset_m$) has a tilt angle ($\alpha$) of between 1° and 6° from the perpendicular of the friction surfaces (6.1, 6.2).

For the preferred embodiment shown in Figure 3.b, however, the second center (m) is, relative to the rotation axis of the disc (7), arranged at the same distance as the first center (M). This fact is indicated by a circumferential line (C) of the disc. For this preferred embodiment, the section of maximum inclination is disposed in a part of the hole opposed to the direction of rotation of the disc, thereby increasing the air uptake. The direction of rotation of the brake disc is indicated in the figure by an arrow.

For both embodiments, those shown in Figures 3.a and 3.b, the tilt angle ($\alpha$) has a minimum value of 1°, so it enables the obtainment of the through holes (8) in a manufacturing process by casting wherein the disc and the holes (8) are simultaneously obtained. Thus the step of machining the openings (8) is avoided in the manufacture, among other steps, thereby reducing the manufacturing time, and therefore reducing the cost of the brake discs. Another aspect that enables the complete manufacture of the brake discs by casting, is the fact that in order to promote the "Venturi effect", the holes (8) of the present invention do not require beveled edges or with recesses on both sides of each track (1, 2).

Moreover, Figure 4.a shows some arrows simulating the air flow when passing through the through holes (8), according to the preferred embodiment shown in Figure 3.a. Figure 4.b shows part of the air flow for the case of retro-vented discs. This air flow is complementary to the air flow of the through holes (8), such as it can be seen in Figure 4c also showing a retro-vented brake disc, for a greater cooling of the disc. Although for the preferred embodiment of this Figure 4.c the openings (3') in the cup (3) of the disc are not included, these openings (3') could be included such as illustrated in Figure 2.a, further contributing to the cooling of the disc.

As for the venting channels (5), such as mentioned above, the radial section of these may vary. This fact can take place due to a greater thickness (e) of at least one of the tracks (1, 2) in its area of largest radius; an increased thickness (e) of both tracks (1, 2) in the area of largest radius of the disc can be seen in Figures 4.b and 4.c. This will generate acceleration in the air velocity when exiting said channels (5).

Additionally, in a complementary or alternative way, the connecting sections (4) can reduce the cross section of the venting channels (5) using the connecting sections (4) with greater width in the part closer to the outer perimeter of the disc. Figure 6.d, in this respect, shows some connecting sections (4) which, in this case, are limited to avoid an increase in the cross section of the venting channels (5) so that, although the "Venturi effect" is not favored in the venting channels (5), neither is the increased air velocity achieved by the air pass through the through holes (8) offset.

The connecting sections (4) may have different geometries as long as favor the air channeling towards the outer perimeter of the disc. Furthermore, as it can be seen in Figure 5, the connecting sections (4) need not necessarily be radially extended with respect to the rotation axis (7) of the disc. The connecting sections (4) curved according to the direction of rotation of the brake disc, which direction of rotation is indicated in Figure 5 by an arrow, can be used both for the arrangement of the holes (8) of Figure 3a, and the arrangement of the holes (8) of Figure 3.b. Also, they can be used both in retro-vented and vented discs.

Preferably the through holes (8) are arranged in the midline of the space provided between two connecting sections (4), such as clearly seen in Figures 6.a, 6.b, 6.d and 6.e. If a connecting section (4) is located in the mid radius of the venting channel (5), the holes (8) are radially placed aligned with said connecting section (4), as it can be seen in Figure 6.c. Preferably at least one through hole (8) is located in each venting channel (5), either located on the first (1) or second (2) track.

For the arrangement of the brake disc in which the number of venting channels (5) is high, the angular sector available for each channel is reduced. In a disc with 30 channels, a sector of 360°/30=12° corresponds to each channel, and a disc with 36 channels, a sector of 360°/36=10° corresponds to each channel.

Especially in the latter case shown, problems of physical interference arise in the manufacture of the brake disc between the elements of a mold defining the venting channels (5) and the holes (8), such that the inclusion of the holes (8) is not allowed under the appropriate conditions. One of the solutions implemented to solve the aforementioned problems of physical interference is to cut out the length of the connecting section (4) in the inner radius of the disc, because it is the part with less space, and combining them with connecting sections (4) even smaller than these, such as it can be clearly seen in Figures 2a, 2.b and 2.c.

Figure 6.a to Figure 6.e show plan views of disc portions illustrating other possible embodiments of the present invention. The dashed lines show the through holes (8) corresponding to the first track (1), i.e. the lower track. Similarly, the connecting sections (4) are represented by dashed lines.

Figures 6.a and 6.d show the same distribution of the through holes (8) on both tracks (1, 2) with the difference, in addition to the geometry of the connecting sections (4), that the brake disc shown in Figure 6.d comprises openings (3') in the cup (3), while the embodiment of Figure 6a has no such openings (3').

The remainder thereof, Figures 6b, 6.c and 6.e, shows different distributions of the holes (8) on both tracks (1, 2). The embodiments shown in these three figures comprise openings (3') in the cup (3), although they may not. Figures 6.c and 6.d also show connecting sections (4) with different possible geometries compatible with any distribution of through holes (8), the holes (8) being like those represented in these figures or like those represented in Figure 3.b.

Those skilled in the art will understand the possibility of making different alterations and modifications of the foregoing description, although it should be understood that the scope of the invention is not limited to the described embodiments and it is defined by the attached claims.

## Claims

1. Brake disc for vehicles, comprising:

   - a first track (1), which comprises at least a first friction surface (6.1),
   - a cup (3), as part of the disc attached to a hub of a vehicle, and
   - a set of through holes (8) distributed along the first track (1), each through hole (8) comprising:

     • a first diameter ($\varnothing_M$) arranged in, at least, the first friction surface (6.1), and
     • a second diameter ($\varnothing_m$) arranged in an opposite surface of, at least, the first track (1), this second diameter ($\varnothing_m$) being smaller than the first diameter ($\varnothing_M$),

   **characterized in that**:

   - a first center (M) and a second center (m) of the first diameter ($\varnothing_M$) and the second diameter ($\varnothing_m$), respectively, are offset from each other with respect to a perpendicular of, at least, the first friction surface (6.1), the projection of the second diameter ($\varnothing_m$) being contained within the projection of the first diameter ($\varnothing_M$), and
   - section of maximum inclination in the connecting part between the first diameter ($\varnothing_M$) and the second diameter ($\varnothing_m$) of the through holes (8), there is a tilt angle ($\alpha$) with respect to the perpendicular of the first friction surface (6.1) of between 1° and 6°.

2. Brake disc for vehicles, according to claim 1, **characterized in that**:

   - the first center (M) and the second center (m) of first diameter ($\varnothing_M$) and the second diameter ($\varnothing_m$), respectively, are aligned with each other with respect to a radial line (R) passing through a rotation axis of the disc (7),

   wherein the center (m) of second diameter ($\varnothing_m$) is

arranged, with respect to the rotation axis of the disc (7), at a distance in the first track (1) greater than the center (M) of first diameter ($\varnothing_M$).

3. Brake disc for vehicles, according to claim 1, **characterized in that**:

   - the first center (M) and the second center (m) of first diameter ($\varnothing_M$) and the second diameter ($\varnothing_m$), respectively, are aligned with each other by a circumferential line (C) with respect to the rotation axis of the disc (7),

   wherein the second center (m) of second diameter ($\varnothing_m$) is, according to the direction of rotation of the disc, following the first center (M) of first diameter ($\varnothing_M$).

4. Brake disc for vehicles, according to any of the preceding claims, **characterized in that** it comprises:

   - a second track (2), which comprises a second friction surface (6.2) facing the outside of the brake disc, and
   - a set of connecting sections (4), arranged in contact with the first track (1) and the second track (2) in an intermediate area between the two tracks (1, 2), such that the connecting sections (4) define venting channels (5) in the intermediate area between the first track (1) and the second track (2).

5. Brake disc for vehicles, according to claim 4, **characterized in that**

   - the through holes (8) are arranged on the first track (1) and/or second track (2) with the first diameter ($\varnothing_M$) on the friction surfaces (6.1, 6.2) and the second diameter ($\varnothing_m$) on the opposite side of the track (1, 2) in which the first diameter ($\varnothing_M$) is arranged,

   such that air flow is accelerated from the outer faces of the tracks (1, 2) of the brake disc to the intermediate area in which the connecting sections (4) are located, so that finally the air is expelled from the disc through the periphery of said intermediate area.

6. Brake disc for vehicles, according to any of the preceding claims, **characterized in that** the through holes (8) comprise a first diameter value ($\varnothing_M$) according to the following formula:

$$\varnothing_M = \varnothing_m + K,$$

wherein $(e/2) \leq K \leq (e+3\,\text{mm})$, with "e" being the track thickness.

7. Brake disc for vehicles, according to claim 6, **characterized in that**:

$$6\,\text{mm} \leq \varnothing_m \leq 10\,\text{mm}.$$

8. Brake disc for vehicles, according to any of claims 4 to 7, **characterized in that** it comprises at least one through hole (8) for each venting channel (5).

9. Brake disc for vehicles, according to any of the preceding claims, characterized that it comprises a set of openings (3') arranged in the cup (3).

10. Brake disc for vehicles, according to any of claims 4 to 9, **characterized in that** the venting channels (5) have a variable section.

11. Brake disc for vehicles, according to any of claims 4 to 10, **characterized in that** the through holes (8) are arranged in the midline of the space between the connecting sections (4).

12. Brake disc for vehicles, according to any of claims 4 to 11, **characterized in that** the through holes (8) are radially aligned with at least one connecting section (4), such connecting section (4) being located in the mean radius of the venting channel (5).

**Patentansprüche**

1. Bremsscheibe für Fahrzeuge, umfassend:

   - eine erste Spur (1), die wenigstens eine erste Reibungsfläche (6.1) aufweist,
   - einen Napf (3), der als Teil der Scheibe an einer Nabe eines Fahrzeugs befestigt ist, und
   - einen Satz von Durchgangslöchern (8), die entlang der ersten Spur (1) verteilt sind, wobei jedes Durchgangsloch (8) umfasst:

      • einen ersten Durchmesser ($\varnothing_M$) an wenigstens der ersten Reibungsfläche (6.1), und
      • einen zweiten Durchmesser ($\varnothing_m$) an einer gegenüberliegenden Fläche wenigstens der ersten Spur (1), wobei der zweite Durchmesser ($\varnothing_m$) kleiner ist als der erste Durchmesser ($\varnothing_M$),

   **dadurch gekennzeichnet, dass**:

   - eine erste Mitte (M) und eine zweite Mitte (m) jeweils des ersten Durchmessers (ØM) und des

zweiten Durchmessers ($\varnothing_m$) voneinander in Bezug auf eine Senkrechte wenigstens der ersten Reibungsfläche (6.1) versetzt sind, wobei die Erstreckung des zweiten Durchmessers ($\varnothing_m$) innerhalb der Erstreckung des ersten Durchmessers ($\varnothing_M$) enthalten ist, und
- in einem Abschnitt einer maximalen Neigung in dem Verbindungsteil zwischen dem ersten Durchmesser ($\varnothing_M$) und dem zweiten Durchmesser ($\varnothing_m$) der Durchgangslöcher (8) ein Neigungswinkel ($\alpha$) in Bezug auf eine Senkrechte der ersten Reibungsfläche (6.1) zwischen 1° und 6° beträgt.

2. Bremsscheibe für Fahrzeuge nach Anspruch 1, **dadurch gekennzeichnet, dass**:

 - die erste Mitte (M) und die zweite Mitte (m) jeweils des ersten Durchmessers ($\varnothing_M$) und des zweiten Durchmessers ($\varnothing_m$) miteinander in Bezug auf eine durch eine Drehachse der Scheibe (7) hindurchgehende Radiallinie (R) ausgerichtet sind,

 wobei die Mitte (m) des zweiten Durchmessers ($\varnothing_m$) in Bezug auf die Drehachse der Scheibe (7) an einer Distanz in der ersten Spur (1), die größer als die Mitte (M) des ersten Durchmessers ($\varnothing_M$) ist, angeordnet ist.

3. Bremsscheibe für Fahrzeuge nach Anspruch 1, **dadurch gekennzeichnet, dass**:

 - die erste Mitte (M) und die zweite Mitte (m) jeweils des ersten Durchmessers ($\varnothing_M$) und des zweiten Durchmessers ($\varnothing_m$) miteinander um eine Umfangslinie (C) in Bezug auf die Drehachse der Scheibe (7) ausgerichtet sind,

 wobei die zweite Mitte (m) des zweiten Durchmessers ($\varnothing_m$) in der Drehrichtung der Scheibe auf die erste Mitte (M) des ersten Durchmessers ($\varnothing_M$) folgt.

4. Bremsscheibe für Fahrzeuge nach einem der vorstehenden Ansprüche, **dadurch gekennzeichnet, dass** diese umfasst:

 - eine zweite Spur (2), die eine zweite Reibungsfläche (6.2) aufweist, die von der Bremsscheibe nach außen gewandt ist, und
 - einen Satz von Verbindungsabschnitten (4), die in Kontakt mit der ersten Spur (1) und der zweiten Spur (2) in einem Zwischenbereich zwischen den zwei Spuren (1, 2) angeordnet sind, sodass die Verbindungsabschnitte (4) Lüftungskanäle (5) in dem Zwischenbereich zwischen der ersten Spur (1) und der zweiten Spur (2) definieren.

5. Bremsscheibe für Fahrzeuge nach Anspruch 4, **dadurch gekennzeichnet, dass**:

 - die Durchgangslöcher (8) an der ersten Spur (1) und/oder zweiten Spur (2) angeordnet sind, wobei sich der erste Durchmesser ($\varnothing_M$) an den Reibungsflächen (6.1, 6.2) befindet und der zweite Durchmesser ($\varnothing_m$) an der gegenüberliegenden Seite der Spur (1, 2), an welcher der erste Durchmesser ($\varnothing_M$) angeordnet ist, befindet,

 sodass der Luftfluss von den Außenflächen der Spuren (1, 2) der Bremsscheibe zu dem Zwischenbereich, in dem die Verbindungsabschnitte (4) angeordnet sind, beschleunigt wird, sodass die Luft schließlich von der Scheibe durch den Umfang des Zwischenbereichs hindurch ausgestoßen wird.

6. Bremsscheibe für Fahrzeuge nach einem der vorstehenden Ansprüche, **dadurch gekennzeichnet, dass** die Durchgangslöcher (8) einen ersten Durchmesserwert ($\varnothing_M$) gemäß der folgenden Formel aufweisen:

$$\varnothing_M = \varnothing_m + K$$

 wobei (e/2) $\leq$ K $\leq$ (e+3 mm), wobei "e" die Spurdicke ist.

7. Bremsscheibe für Fahrzeuge nach Anspruch 6, **dadurch gekennzeichnet, dass**:

$$6 \text{ mm} \leq \varnothing_m \leq 10 \text{ mm}$$

8. Bremsscheibe für Fahrzeuge nach einem der Ansprüche 4 bis 7, **dadurch gekennzeichnet, dass** diese wenigstens ein Durchgangsloch (8) für jeden Lüftungskanal (5) umfasst.

9. Bremsscheibe für Fahrzeuge nach einem der vorstehenden Ansprüche, **dadurch gekennzeichnet, dass** diese einen Satz von in dem Napf (3) angeordneten Öffnungen (3') umfasst.

10. Bremsscheibe für Fahrzeuge nach einem der Ansprüche 4 bis 9, **dadurch gekennzeichnet, dass** die Lüftungskanäle (5) einen variablen Schnitt aufweisen.

11. Bremsscheibe für Fahrzeuge nach einem der Ansprüche 4 bis 10, **dadurch gekennzeichnet, dass** die Durchgangslöcher (8) auf der Mittenlinie des Zwischenraums zwischen den Verbindungsabschnitten (4) angeordnet sind.

**12.** Bremsscheibe für Fahrzeuge nach einem der Ansprüche 4 bis 11, **dadurch gekennzeichnet, dass** die Durchgangslöcher (8) radial mit wenigstens einem Verbindungsabschnitt (4) ausgerichtet sind, wobei sich ein derartiger Verbindungsabschnitt (4) in dem mittleren Radius des Lüftungskanals (5) befindet.

**Revendications**

**1.** Disque de frein pour véhicules, comprenant :

une première voie (1) qui comprend au moins une première surface de friction (6.1),
une coupelle (3), en tant que partie du disque fixée à un moyeu d'un véhicule, et
un ensemble de trous débouchants (8) répartis le long de la première voie (1), chaque trou débouchant (8) comprenant :

• un premier diamètre ($\varnothing_M$) agencé au moins dans la première surface de friction (6.1), et
• un second diamètre ($\varnothing_m$) agencé dans une surface opposée, au moins de la première voie (1), ce second diamètre ($\varnothing_m$) étant inférieur au premier diamètre ($\varnothing_M$),

**caractérisé en ce que** :

- un premier centre (M) et un second centre (m) du premier diamètre ($\varnothing_M$) et du second diamètre ($\varnothing_m$) respectivement, sont décalés l'un de l'autre par rapport à une perpendiculaire au moins de la première surface de friction (6.1), la saillie du second diamètre ($\varnothing_m$) étant contenue à l'intérieur de la saillie du premier diamètre ($\varnothing_M$), et
- une section d'inclinaison maximum dans la partie de raccordement entre le premier diamètre ($\varnothing_M$) et le second diamètre ($\varnothing_m$) des trous débouchants (8), où l'on trouve un angle d'inclinaison ($\alpha$) par rapport à la perpendiculaire de la première surface de friction (6.1) compris entre 1° et 6°.

**2.** Disque de frein pour véhicules selon la revendication 1, **caractérisé en ce que** :

- le premier centre (M) et le second centre (m) du premier diamètre ($\varnothing_M$) et du second diamètre ($\varnothing_m$) respectivement, sont alignés entre eux par rapport à une ligne radiale (R) passant par un axe de rotation du disque (7),

dans lequel le centre (m) du second diamètre ($\varnothing_m$) est agencé, par rapport à l'axe de rotation du disque (7), à une distance dans la première voie (1) supérieure au centre (M) du premier diamètre ($\varnothing_M$).

**3.** Disque de frein pour véhicules selon la revendication 1, **caractérisé en ce que** :

- le premier centre (M) et le second centre (m) du premier diamètre ($\varnothing_M$) et du second diamètre ($\varnothing_m$) respectivement, sont alignés entre eux par une ligne circonférentielle (C) par rapport à l'axe de rotation du disque (7),

dans lequel le second centre (m) du second diamètre ($\varnothing_m$), selon la direction de rotation du disque, suit le premier centre (M) du premier diamètre ($\varnothing_M$).

**4.** Disque de frein pour véhicules selon l'une quelconque des revendications précédentes, **caractérisé en ce qu'**il comprend :

- une seconde voie (2) qui comprend une seconde surface de friction (6.2) orientée vers l'extérieur du disque de frein, et

un ensemble de sections de connexion (4) agencé en contact avec la première voie (1) et la seconde voie (2) dans une zone intermédiaire entre les deux voies (1, 2), de sorte que les sections de raccordement (4) définissent des canaux d'évent (5) dans la zone intermédiaire entre la première voie (1) et la seconde voie (2).

**5.** Disque de frein pour véhicules selon la revendication 4, **caractérisé en ce que** :

- les trous débouchants (8) sont agencés sur la première voie (1) et/ou la seconde voie (2) avec le premier diamètre ($\varnothing_M$) sur les surfaces de friction (6.1, 6.2) et le second diamètre ($\varnothing_m$) sur le côté opposé de la voie (1, 2) dans laquelle le premier diamètre ($\varnothing_M$) est agencé,

de sorte que l'écoulement d'air est accéléré des faces externes des voies (1, 2) du disque de frein à la zone intermédiaire dans laquelle les sections de raccordement (4) sont positionnées, de sorte que finalement l'air est expulsé du disque par la périphérie de ladite zone intermédiaire.

**6.** Disque de frein pour véhicules selon l'une quelconque des revendications précédentes, **caractérisé en ce que** les trous débouchants (8) comprennent une valeur de premier diamètre ($\varnothing_M$) selon la formule suivante :

$$\varnothing_M = \varnothing_m + K,$$

où $(e/2) \leq K \leq (e + 3\ mm)$, avec « e » qui est l'épaisseur de la voie.

7. Disque de frein pour véhicules selon la revendication 6, **caractérisé en ce que** :

$$6\ mm \leq \varnothing_m \leq 10\ mm.$$

8. Disque de frein pour véhicules selon l'une quelconque des revendications 4 à 7, **caractérisé en ce qu'**il comprend au moins un trou débouchant (8) pour chaque canal d'évent (5).

9. Disque de frein pour véhicules selon l'une quelconque des revendications précédentes, **caractérisé en ce qu'**il comprend un ensemble d'ouvertures (3') agencé dans la coupelle (3).

10. Disque de frein pour véhicules selon l'une quelconque des revendications 4 à 9, **caractérisé en ce que** les canaux d'évent (5) ont une section variable.

11. Disque de frein pour véhicules selon l'une quelconque des revendications 4 à 10, **caractérisé en ce que** les trous débouchants (8) sont agencés dans la ligne centrale de l'espace entre les sections de raccordement (4).

12. Disque de frein pour véhicules selon l'une quelconque des revendications 4 à 11, **caractérisé en ce que** les trous débouchants (8) sont radialement alignés avec au moins une section de raccordement (4), de sorte que la section de raccordement (4) est positionnée dans le rayon moyen du canal d' évent (5).

FIG. 1

FIG. 2a

FIG. 2b

$\phi_M$

8

6.2

11

3

2

7

10

5

4

9

6.1

4

$\phi_M$

$\phi_m$

1

## FIG. 2c

1

3

3

8

11

4

10

4

9

$\phi_M$

$\phi_m$

8

6.2

3

7

3'

$\phi_m$

1

6.1

$\phi_M$

## FIG. 2d

FIG. 3a

FIG. 3b

FIG. 4a

FIG. 4b

FIG. 4c

FIG. 5

FIG. 6a    FIG. 6b    FIG. 6c

FIG. 6d    FIG. 6e

**EP 2 682 634 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2507264 A1
- EP 0521754 B1
- US 2001032759 A1
- EP 2060822 A1